# EUROPEAN PATENT APPLICATION

(11) **EP 4 803 934 A2**
(43) Date of publication of application: **09.09.2026**
(21) Application number: 26159160.6
(22) Date of filing: 17.02.2026
(51) Int. Cl.: G01S 19/05, G01S 19/06, G01S 19/21

(54) **SYSTEM AND METHOD FOR GNSS VEHICLE NAVIGATION DATA AUGMENTATION**

(30) Priority: 05.03.2025 US 202519070980
(71) Applicant: The Boeing Company, Arlington, VA 22202 (US)
(72) Inventor: NEPUTE, Brandon Thomas, ARLINGTON, 22202 (US); ROTH, Tyler Titani, ARLINGTON, 22202 (US); BUSH, John Eric, BOTHELL (US); MURPHY, Timothy Allen, MARYSVILLE (US)
(74) Representative: Plasseraud IP

(57) **Abstract**

A device includes a memory (342) configured to store vehicle data (356, 358) and one or more processors (344). The one or more processors are configured to receive, from a first augmentation source, first augmentation data corresponding to a first Global Navigation Satellite System (GNSS) constellation; to receive, from a second augmentation source, second augmentation data corresponding to a second GNSS constellation; to select or derive augmentation data by comparing a confidence value (352) of the first augmentation data to a confidence value (354) of the second augmentation data; to generate aggregated data (332) for the vehicle, wherein the aggregated data (332) includes the selected augmentation data and navigation data from the corresponding GNSS constellation; and to send the aggregated data to the vehicle.

## Description

### FIELD OF THE DISCLOSURE

The present disclosure is generally related to vehicle navigation systems, and more particularly, to systems and methods for providing navigation data associated with a Global Navigation Satellite System (GNSS) to a vehicle.

### BACKGROUND

Vehicles, such as aircraft, water vehicles, ground vehicles, and spacecraft can employ navigation systems to determine their position. For example, a vehicle can employ a Global Navigation Satellite System (GNSS), such as the Global Positioning System (GPS) or the European Union's Galileo, to determine the vehicle's position, velocity, and time based on navigation data received from satellites of the GNSS. However, GNSS navigation is subject to several potential problems. For example, because navigation data received from GNSS satellites lacks security assurances, the vehicle cannot verify that received navigation data originated from a trusted source and cannot verify whether the navigation data was altered in transit. As another example, in some cases, signals between GNSS satellites and vehicles are disrupted by interference, such as ionospheric activity or human-made jamming devices. Further, in some cases, GNSS navigation systems are subject to a lack of signal integrity, multi-path errors, a lack of line of sight, or potential cyberattacks.

Accordingly, there is a need for a system that can help vehicles detect and prevent potential problems associated with using a GNSS navigation system.

### SUMMARY

In a particular implementation, a device includes a memory configured to store vehicle data for a vehicle and one or more processors coupled to the memory. The one or more processors are configured to receive, from a first augmentation source, first augmentation data corresponding to a first Global Navigation Satellite System (GNSS) constellation. The one or more processors are further configured to receive, from a second augmentation source that is different from the first augmentation source, second augmentation data corresponding to a second GNSS constellation. The one or more processors are also configured to select or derive augmentation data by comparing a confidence value of the first augmentation data to a confidence value of the second augmentation data. The one or more processors are further configured to generate aggregated data for the vehicle, wherein the aggregated data includes the selected augmentation data and navigation data from the corresponding GNSS constellation. The one or more processors are also configured to send the aggregated data to the vehicle.

In a particular implementation, a method includes receiving, for a vehicle from a first augmentation source, first augmentation data corresponding to a first Global Navigation Satellite System (GNSS) constellation. The method further includes receiving, for the vehicle from a second augmentation source that is different from the first augmentation source, second augmentation data corresponding to a second GNSS constellation. The method further includes selecting or deriving augmentation data by comparing a confidence value of the first augmentation data to a confidence value of the second augmentation data. The method further includes generating aggregated data for the vehicle, wherein the aggregated data includes the selected augmentation data and navigation data from the corresponding GNSS constellation. The method further includes sending the aggregated data to the vehicle.

In a particular implementation, an aircraft includes a transceiver configured to receive unsigned navigation data associated with satellites of a Global Navigation Satellite System (GNSS) constellation. The aircraft further includes one or more processors coupled to the transceiver. The one or more processors are configured to verify authenticity of signed navigation data from a ground station, wherein the signed navigation data is received as part of a transmission of aggregated data. The one or more processors are further configured to, after verification of the signed navigation data, perform a verification of the unsigned navigation data based on a comparison with the signed navigation data. The one or more processors are also configured to control operation of the aircraft based on the verification of the unsigned navigation data.

The features, functions, and advantages described herein can be achieved independently in various implementations or can be combined in yet other implementations, further details of which can be found with reference to the following description and drawings.

### BRIEF DESCRIPTION OF THE DRAWINGS

FIG. 1 depicts an example of a first system that provides navigation data associated with a Global Navigation Satellite System (GNSS) network to a vehicle, in accordance with some examples of the subject disclosure.
FIG. 2 depicts an example of a second system that provides navigation data associated with a GNSS network to a vehicle, in accordance with some examples of the subject disclosure.
FIG. 3 depicts an example system that includes a ground station that sends navigation data associated with a GNSS network to a vehicle, in accordance with some examples of the subject disclosure.
FIG. 4 is a flow chart of an example of a method of sending navigation data associated with a GNSS network to a vehicle.
FIG. 5 is a flowchart illustrative of an example of a life cycle of an aircraft that receives navigation data associated with a GNSS network from a ground station, in accordance with some examples of the subject disclosure.
FIG. 6 is a block diagram of a particular implementation of an aircraft associated with the life cycle of FIG. 5.
FIG. 7 is a block diagram of a computing environment including a computing device configured to support aspects of computer-implemented methods and computer-executable program instructions (or code) according to the present disclosure.

### DETAILED DESCRIPTION

Systems and methods are described herein that provide additional navigation data associated with a Global Navigation Satellite System (GNSS) network to a vehicle (e.g., an aircraft). In some cases, the additional navigation data is used to prevent errors due to interference (e.g., due to signal jamming or ionospheric activity), signal spoofing, a lack of signal integrity, multi-path errors, a lack of line of sight, potential cyberattacks, or any combination thereof.

As described further herein, a vehicle receives navigation data from satellites of one or more GNSS networks (e.g., Global Positioning System (GPS)). Augmentation data (e.g., additional navigation data) for the vehicle is provided by the GNSS satellites to one or more augmentation sources. The one or more augmentation sources provide the augmentation data to a ground station. In some cases, the one or more augmentation sources add additional data (e.g., data measured by the one or more augmentation sources or data derived from the augmentation data received from the satellites) to the augmentation data. In some implementations, augmentation sources associated with multiple GNSS satellite constellations send augmentation data for the vehicle to the ground station. The ground station selects augmentation data from an augmentation source based on confidence values, aggregates the selected augmentation data with corresponding navigation data, and sends the aggregated data to the vehicle. In some implementations, the aggregated data is sent via a secured link between the ground station and the vehicle.

In some cases, differences between the aggregated data and GNSS navigation data received at the vehicle directly from the GNSS constellation indicate the presence of potential errors that can be prevented. Further, in some cases, the presence of repeatable errors (e.g., errors due to spoofed navigation data) can be communicated to other vehicles to prevent errors at those vehicles. Additionally, because augmentation data is received from multiple augmentation sources, the system can more accurately determine accurate navigation data under circumstances where one or more augmentation source provides inaccurate navigation data or fails to provide accurate navigation data according to a desired transmission schedule, as compared to a system where augmentation data is only received from a single augmentation source.

As used herein, a "ground station" refers to any facility that can receive augmentation data from an augmentation source in accordance with connection requirements of the augmentation source, if present. In other words, ground stations, as contemplated herein, are not exclusively limited to facilities located on solid ground and can also include, for example, a naval facility that has a network connection to a High Accuracy and Robustness Service (HARS) augmentation source with sufficient reliability and connection speed to meet HARS connection requirements.

As used herein, a "secured link" between a ground station and a vehicle refers to a communication connection between an entity associated with the ground station and the vehicle. As used herein, a secured link provides an assurance of integrity, which includes authenticity and non-repudiation. The secured link provides the vehicle an explicit or implicit assurance that the data received is from a trusted ground station and has not been altered in transit. Accordingly, even if two communications are sent from two different ground stations to a same vehicle, the two communications would both be contemplated herein as utilizing a secured link if they both arrive at the vehicle in the same manner and there is a security protection added (e.g., encrypted communications sent via a wide band pipe that carries multiple types of communications, via a virtual private network (VPN) connection, or via a series of digitally signed transmissions sent over a public data link). Further, in some cases, a secured link with an aircraft can be maintained even though the secured link is handed off from one ground station to another ground station.

The figures and the following description illustrate specific exemplary implementations. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific implementations or examples described below, but by the claims and their equivalents.

Particular implementations are described herein with reference to the drawings. In the description, common features are designated by common reference numbers throughout the drawings.

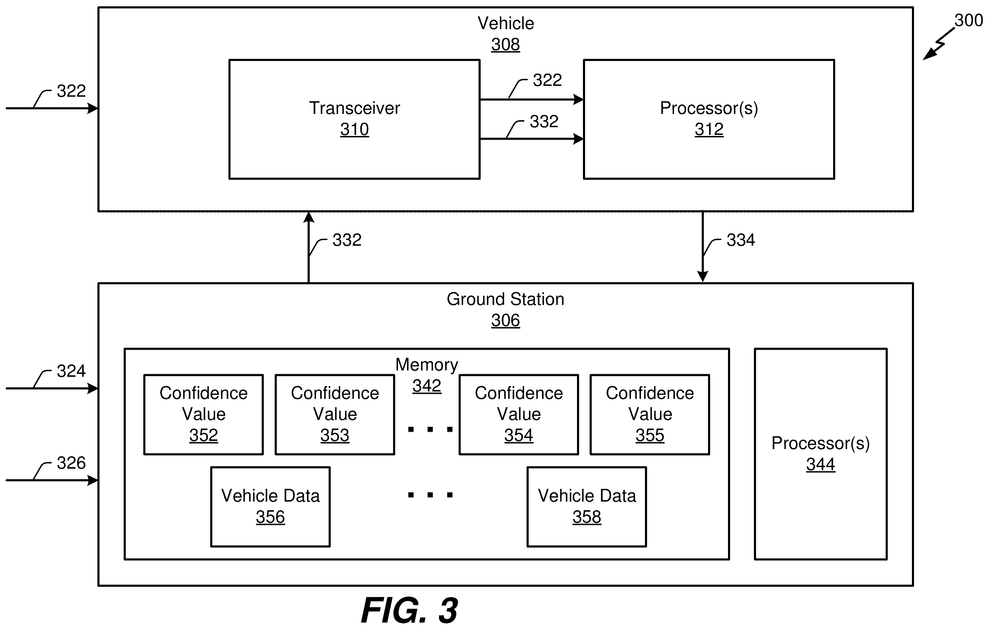

As used herein, various terminology is used for the purpose of describing particular implementations only and is not intended to be limiting. For example, the singular forms "a," "an," and "the" are intended to include the plural forms as well, unless the context clearly indicates otherwise. Further, some features described herein are singular in some implementations and plural in other implementations. To illustrate, FIG. 3 depicts a vehicle 308 including one or more processors ("processor(s)" 312 in FIG. 3), which indicates that in some implementations the vehicle 308 includes a single processor 312, and in other implementations the vehicle 308 includes multiple processors 312. For ease of reference herein, such features are generally introduced as "one or more" features and are subsequently referred to in the singular or optional plural (as typically indicated by "(s)") unless aspects related to multiple of the features are being described.

The terms "comprise," "comprises," and "comprising" are used interchangeably with "include," "includes," or "including." Additionally, the term "wherein" is used interchangeably with the term "where." As used herein, "exemplary" indicates an example, an implementation, and/or an aspect, and should not be construed as limiting or as indicating a preference or a preferred implementation. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements.

As used herein, "generating," "calculating," "using," "selecting," "accessing," and "determining" are interchangeable unless context indicates otherwise. For example, "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some implementations, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components.

Within this disclosure, in some cases, different entities (which are variously referred to as "components," "units," "devices," etc.) are described or claimed as "configured" to perform one or more tasks or operations. This formulation-[entity] configured to [perform one or more tasks]-is used herein to refer to structure (i.e., something physical, such as an electronic circuit). More specifically, this formulation is used to indicate that this structure is arranged to perform the one or more tasks during operation. A structure can be said to be "configured to" perform some task even if the structure is not currently being operated. A "memory device configured to store data" is intended to cover, for example, an integrated circuit that has circuitry that stores data during operation, even if the integrated circuit in question is not currently being used (e.g., a power supply is not connected to it). Thus, an entity described or recited as "configured to" perform some task refers to something physical, such as a device, circuit, memory storing program instructions executable to implement the task, etc. This phrase is not used herein to refer to something intangible. Further, the term "configured to" is not intended to mean "configurable to." An unprogrammed field-programmable gate array, for example, would not be considered to be "configured to" perform some specific function, although it could be "configurable to" perform that function after programming. Additionally, reciting in the appended claims that a structure is "configured to" perform one or more tasks is expressly intended not to be interpreted as having means-plus-function elements.

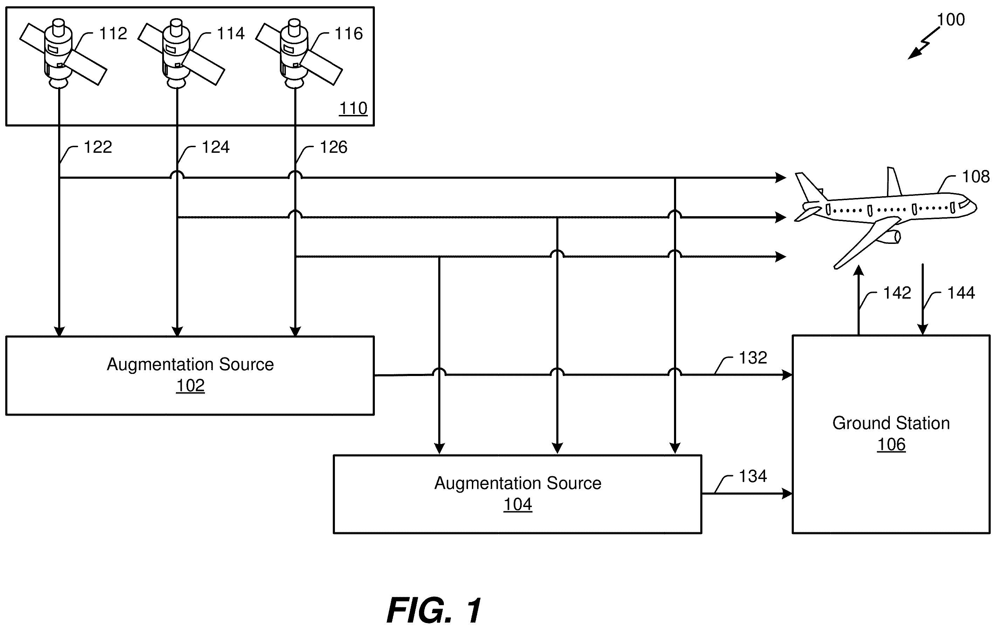

FIG. 1 is a diagram that illustrates a system 100 where GNSS navigation data and aggregated GNSS augmentation data are provided to a vehicle. System 100 includes augmentation source 102, augmentation source 104, ground station 106, vehicle 108, and GNSS constellation 110. GNSS constellation 110 includes GNSS satellites 112, 114, and 116. In some implementations, GNSS constellation 110 includes GNSS satellites other than GNSS satellites 112, 114, and 116. In the implementation shown in FIG. 1, two augmentation sources (augmentation sources 102 and 104), one ground station (ground station 106), and three GNSS satellites (GNSS satellites 112, 114, and 116) are depicted. However, in other implementations, different quantities of augmentation sources, ground stations, GNSS satellites, or any combination thereof are included in system 100. Further, the relative position of various devices of system 100 is for clarity and should not be interpreted as representing physical locations of the various devices. For example, although GNSS satellites 112, 114, and 116 are depicted as being grouped together in FIG. 1, in some cases, GNSS satellites 112, 114, and 116 are scattered in respective orbits around the Earth. Although vehicle 108 is depicted as an aircraft, in other implementations, other vehicles are contemplated, including water vehicles, ground vehicles, and spacecraft.

GNSS satellite 112 generates and broadcasts navigation data 122 (e.g., Global Positioning System (GPS) navigation data). Navigation data 122 is received at vehicle 108, augmentation source 102, and augmentation source 104. Similarly, GNSS satellite 114 generates and broadcasts navigation data 124. Navigation data 124 is received at vehicle 108, augmentation source 102, and augmentation source 104. Similarly, GNSS satellite 116 generates and broadcasts navigation data 126. Navigation data 126 is received at vehicle 108, augmentation source 102, and augmentation source 104. In some implementations, navigation data 122, 124, 126, or any combination thereof further includes ranging signals.

Augmentation source 102 receives navigation data 122, 124, and 126 and derives and sends augmentation data 132 to ground station 106. In some cases, augmentation data 132 includes observed measurement errors, models of error sources, raw navigation message bits, signed hashes of message bits and monitoring information related to signal or service integrity, or any combination thereof. Similarly, augmentation source 104 receives navigation data 122, 124, and 126 and sends augmentation data 134 to ground station 106. In some cases, augmentation data 132 is the same as augmentation data 134. In other cases, augmentation data 132 differs from augmentation data 134. For example, augmentation source 102 can send different information to ground station 106 than augmentation source 104. As another example, augmentation sources 102 and 104 can calculate different results (e.g., due to an error), resulting in augmentation data 132 differing from augmentation data 134.

In various implementations, augmentation data 132 includes one or more of: navigation data 122, navigation data 124, navigation data 126, orbit data of GNSS satellite 112, orbit data of GNSS satellite 114, orbit data of GNSS satellite 116, clock data of GNSS satellite 112, clock data of GNSS satellite 114, clock data of GNSS satellite 116, tropospheric model data, ionospheric model data, or any combination thereof. Similarly, in various implementations, augmentation data 134 includes one or more of: navigation data 122, navigation data 124, navigation data 126, orbit data of GNSS satellite 112, orbit data of GNSS satellite 114, orbit data of GNSS satellite 116, clock data of GNSS satellite 112, clock data of GNSS satellite 114, clock data of GNSS satellite 116, tropospheric model data, ionospheric model data, or any combination thereof.

Ground station 106 receives augmentation data 132 from augmentation source 102, receives augmentation data 134 from augmentation source 104, generates aggregated data 142 for vehicle 108 based on augmentation data 132 or 134, and sends aggregated data 142 to vehicle 108. More specifically, as further discussed below with reference to FIG. 3, ground station 106 selects between respective portions of augmentation data 132 and augmentation data 134 based on respective confidence values. In some implementations, the confidence values are calculated based on availability determinations, accuracy determinations, or both. For example, in some cases, ground station 106 determines that augmentation data 132 provides more accurate clock and orbital correction data but augmentation data 132 provides more accurate atmospheric correction data. As a result, ground station 106 selects clock and orbital correction data from augmentation data 132 and selects atmospheric correction data from augmentation data 134. Ground station 106 generates aggregated data 142 including the selected augmentation data and navigation data (e.g., navigation data stored at ground station 106 or navigation data received with augmentation data 132). In some cases, ground station 106 combines multiple transmissions of augmentation data corresponding to multiple respective periods of time into aggregated data 142.

Subsequent to sending aggregated data 142 to vehicle 108, ground station 106 receives vehicle report 144 from vehicle 108. In various cases, vehicle report 144 can indicate that vehicle 108 is operating normally or can report a discrepancy between aggregated data 142 and navigation data 122, 124, and 126. In some implementations, in response to receiving a report of a discrepancy, ground station 106 identifies a source of erroneous navigation data. In other implementations, ground station 106 receives identification of the source of the erroneous navigation data from vehicle 108. In some implementations, ground station 106 publishes an indication of the report to another vehicle. In some implementations, in response to receiving multiple reports that indicate erroneous navigation data, ground station 106 identifies a region where repeated discrepancies occur. For example, in response to receiving one or more reports from aircraft flying in a particular region that erroneous navigation data is being received, ground station 106 can identify that a signal is being spoofed in that region and alert other aircraft in or planning to enter that region. In some implementations, aggregated data 142, vehicle report 144, or both, are sent using a secured link between ground station 106 and vehicle 108.

As further described below with reference to FIG. 3, vehicle 108 receives aggregated data 142 from ground station 106 and verifies navigation data 122, 124, and 126 included in the signals from GNSS satellites 112, 114, and 116 using aggregated data 142. In some implementations, verification of navigation data 122, 124, and 126 against the signed copies or signed hashes of the navigation data included in aggregated data 142 helps ensure that the signals tracked by the aircraft 108 are the authentic signals produced by GNSS satellites 112, 114, and 116. Operation of vehicle 108 is controlled based on the verification of navigation data 122, 124, and 126. More specifically, if navigation data 122, 124, and 126 is verified, then vehicle 108 is controlled based on navigation data 122, 124, and 126. Vehicle 108 reports normal operation to ground station 106 via vehicle report 144. If a discrepancy is found between aggregated data 142 and one or more of navigation data 122, 124, and 126, vehicle 108 sends an indication of the discrepancy to ground station 106 via vehicle report 144. In some implementations, vehicle 108 additionally identifies a source of the discrepancy (e.g., navigation data 124) and excludes this data from use in computing a navigation solution.

In some implementations, augmentation data 132 (e.g., augmentation data associated with High Accuracy and Robustness Service (HARS)) is encrypted, sent with a digital signature to verify authenticity of augmentation data 132, or both. In some cases, sending augmentation data 132 with a digital signature provides resiliency against potential jamming or spoofing by allowing a recipient (e.g., ground station 106 or vehicle 108) to identify if received information has been tampered or interfered with. In some implementations, ground station 106 additionally encrypts aggregated data 142, sends aggregated data 142 to vehicle 108 with a digital signature, or both. Accordingly, in some implementations, vehicle 108 decrypts aggregated data 142, verifies authenticity of aggregated data 142 using a digital signature, or both. In some cases where ground station 106 verifies a digital signature received with augmentation data 132 and aggregated data 142 is sent with a digital signature, the two digital signatures are different.

In the illustrated implementation, GNSS constellation 110 is associated with a GNSS network, such as GPS, BeiDou Navigation Satellite System (BDS), Galileo, Global'naya Navigatsionnaya Sputnikovaya Sistema (GLONASS), India Regional Navigation Satellite System (IRNSS), or Quasi-Zenith Satellite System (QZSS). Further, augmentation source 102 is one of HARS, Galileo High Accuracy Service (HAS), Southern Positioning Augmentation Network (SouthPAN), or one or more local reference stations. In various implementations, a local reference station is one of a group of facilities in fixed positions that compare their positions to positions calculated from a GNSS network to produce augmentation data associated with the GNSS network, to monitor signal integrity, or both. Additionally, augmentation source 104 is a different one of HARS, HAS, SouthPAN, or one or more local reference stations.

In various implementations, augmentation source 102 is associated with a protocol that requires a constant network connection between augmentation source 102 and a recipient vehicle (e.g., vehicle 108). However, in some cases, vehicle 108 is unable to provide a constant network connection (e.g., due to hardware constraints at vehicle 108 or due to a position of vehicle 108). In the illustrated implementation, ground station 106 satisfies the requirements of the protocol in place of vehicle 108. As discussed above, in some cases ground station 106 combines multiple transmissions of augmentation data corresponding to multiple respective periods of time. As a result, in some cases, augmentation data is still provided to vehicle 108 (e.g., as part of aggregated data 142) despite vehicle 108 not being available to receive the augmentation data as frequently as the augmentation data is provided to ground station 106.

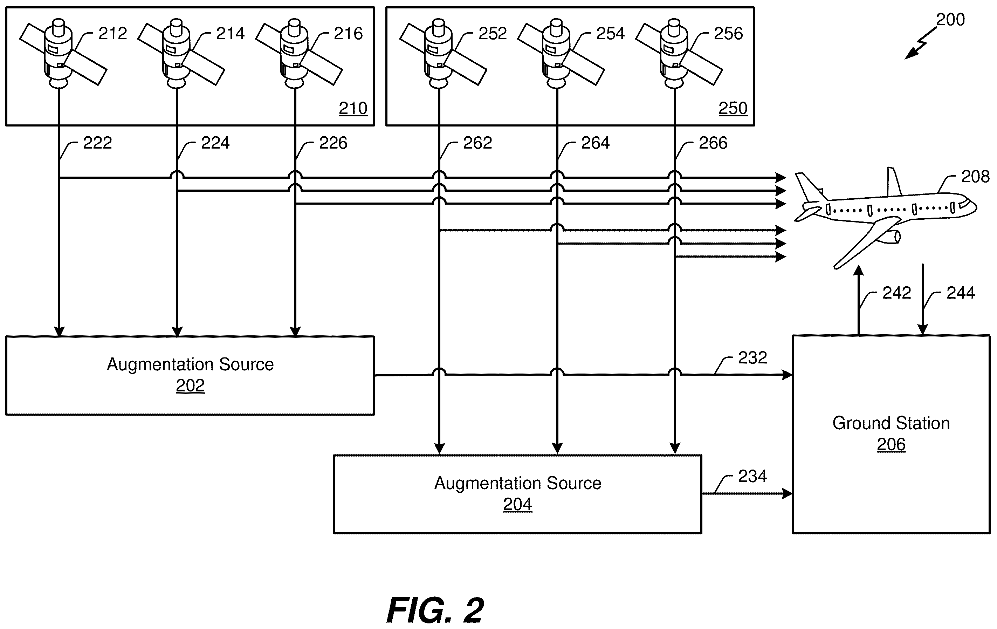

FIG. 2 is a diagram that illustrates a system 200 where GNSS navigation data and aggregated GNSS data are provided to a vehicle. System 200 includes augmentation source 202, augmentation source 204, ground station 206, vehicle 208, GNSS constellation 210, and GNSS constellation 250. GNSS constellation 210 includes GNSS satellites 212, 214, and 216. GNSS constellation 250 includes GNSS satellites 252, 254, and 256. In some implementations, GNSS constellation 210 includes GNSS satellites other than GNSS satellites 212, 214, and 216. Similarly, in some implementations, GNSS constellation 250 includes GNSS satellites other than GNSS satellites 252, 254, and 256. In the implementation shown in FIG. 2, two augmentation sources (augmentation sources 202 and 204), one ground station (ground station 206), and six GNSS satellites (GNSS satellites 212, 214, 216, 252, 254, and 256) are depicted. However, in other implementations, different quantities of augmentation sources, ground stations, GNSS satellites, or any combination thereof are included in system 200. Further, the relative position of various devices of system 200 is for clarity and should not be interpreted as representing physical locations of the various devices. For example, although GNSS satellites 212, 214, and 216 are depicted as being grouped together in FIG. 2, in some cases, GNSS satellites 212, 214, and 216 are scattered in respective orbits around the Earth. Although vehicle 208 is depicted as an aircraft, in other implementations, other vehicles are contemplated, including water vehicles, ground vehicles, and spacecraft.

Similar to system 100 of FIG. 1, in system 200, navigation data 222, 224, and 226 are generated by respective GNSS satellites 212, 214, and 216 of GNSS constellation 210, and navigation data 222, 224, and 226 are broadcast to vehicle 208. However, unlike in FIG. 1, where navigation data 122, 124, and 126 are received by multiple augmentation sources (augmentation sources 102 and 104), in FIG. 2, navigation data 222, 224, and 226 are received by augmentation source 202 but not augmentation source 204. Additionally, in system 200, navigation data 262, 264, and 266 are generated by respective GNSS satellites 252, 254, and 256 of GNSS constellation 250, and navigation data 262, 264, and 266 are broadcast to vehicle 208 and augmentation source 204 but not to augmentation source 202. Accordingly, augmentation data 232 is based on navigation data from GNSS constellation 210 and augmentation data 234 is based on navigation data from GNSS constellation 250. Accordingly, in some cases, augmentation data 232 and 234 will differ due to corresponding to different GNSS networks (e.g., due to the GNSS networks producing different data, due to the GNSS networks generating data at different timings, or due to a problem with one GNSS causing erroneous results from that network).

Ground station 206 and vehicle 208 function in a manner similar to that described above regarding ground station 106 and vehicle 108 in FIG. 1. Aggregated data 242 is sent from ground station 206 to vehicle 208, and vehicle report 244 is sent from vehicle 208 to ground station 206. In some implementations, aggregated data 242, vehicle report 244, or both, are sent using a secured link between ground station 206 and vehicle 208. However, as further discussed below with reference to FIG. 3, in some cases, confidence values at ground station 206 are additionally based on availability determinations, accuracy determinations, or both, associated with data values received from a particular GNSS network. For example, ground station 206 can have a higher confidence value associated with orbital correction data received from augmentation source 202 because a GNSS network of GNSS constellation 210 provides additional data or security features (e.g., encryption or digital signatures) not provided by a GNSS network of GNSS constellation 250. As another example, some GNSS networks of GNSS constellations 210 and 250 could be known to provide more accurate information for vehicles located in particular regions (e.g., GLONASS is more accurate in Russia and IRNSS is more accurate in India). In that example, ground station 206 has a higher confidence value associated with augmentation data received from a GLONASS augmentation source when vehicle 208 is located in Russia and a higher confidence value associated with augmentation data received from an IRNSS augmentation source when vehicle 208 is located in India.

FIG. 3 is a diagram that illustrates a system 300 that includes a ground station 306 that sends navigation data associated with a GNSS constellation to a vehicle 308. System 300 includes ground station 306 and vehicle 308. Ground station 306 includes memory 342 and processor(s) 344. Memory 342 includes confidence values 352, 353, 354 and 355 and vehicle data 356 and 358. Vehicle 308 includes transceiver 310 and processor(s) 312. In some implementations, ground station 306 and vehicle 308 correspond to ground station 106 and vehicle 108 of FIG. 1, respectively. In some implementations, ground station 306 and vehicle 308 correspond to ground station 206 and vehicle 208 of FIG. 2, respectively. For simplicity, navigation data received from multiple GNSS satellites, multiple GNSS constellations, or both, is depicted as navigation data 322. In some implementations, transceiver 310 is replaced by a receiver and a transmitter.

In the example of FIG. 3, memory 342 of ground station 306 stores a plurality of confidence values (e.g., confidence values 352-355), where one or more confidence values correspond to each augmentation source that provides augmentation data to ground station 306. Further, memory 342 stores a plurality of sets of vehicle data (e.g., vehicle data 356 and 358), each corresponding to a respective vehicle. In some implementations, multiple sets of confidence values (e.g., confidence values 354 and 355) correspond to a set of vehicle data (e.g., vehicle data 358).

Ground station 306 receives augmentation data 324 from a first augmentation source (e.g., augmentation source 102 or 202) and augmentation data 326 from a second augmentation source (e.g., augmentation source 104 or 204). For one or more data fields to be included in aggregated data 332, processor(s) 344 are used to select between augmentation data 324 and 326 by comparing corresponding confidence values. In some implementations, a single confidence value (e.g., confidence value 352) represents an individual data field (e.g., ionospheric data, tropospheric data, clock data, or orbit data). In some implementations, a single confidence value (e.g., confidence value (e.g., confidence value 353) represents multiple data fields (e.g., clock data and orbit data). Confidence values are determined as discussed below. After selecting or deriving augmentation data to send to vehicle 308, processor(s) 344 generate aggregated data 332 including the selected augmentation data and navigation data from a corresponding GNSS constellation. In some cases, the navigation data is part of the selected augmentation data. In other cases, the navigation data is stored at ground station 306 as part of vehicle data corresponding to vehicle 308 (e.g., vehicle data 356).

Aggregated data 332 is sent from ground station 306 to vehicle 308. Subsequently, ground station 306 receives vehicle report 334 and stores at least some data associated with vehicle report 334 as part of vehicle data corresponding to vehicle 308 (e.g., vehicle data 356). In some cases, vehicle report 334 indicates that vehicle 308 is operating normally. In other cases, vehicle report 334 indicates a detected discrepancy between aggregated data 332 and navigation data 322 received at vehicle 308. In some implementations, vehicle report 334 indicates a source of the detected discrepancy. In other implementations, ground station 306 detects the source of the detected discrepancy. Further, in some implementations, ground station 306 publishes an indication of vehicle report 334 to another vehicle (e.g., an indication that erroneous navigation data was received from a particular source). In some implementations, in response to receiving multiple reports that indicate erroneous navigation data, ground station 306 identifies a region where repeated discrepancies occur. For example, in response to receiving one or more reports from aircraft flying in a particular region that erroneous navigation data is being received, ground station 306 can identify that a signal is being spoofed in that region and alert other aircraft in or planning to enter that region. In some implementations, aggregated data 332, vehicle report 334, or both, are sent using a secured link between ground station 306 and vehicle 308. Vehicle 308, ground station 306, or both, more readily trust transmissions using the secured link due to additional security associated with using the secured link.

In the illustrated implementation, confidence values 352-355 are determined based on calculated accuracy of the respective augmentation sources for one or more respective data fields. The calculated accuracy is determined based on comparisons between respective data received from the one or more augmentation sources, comparisons between the augmentation data and corresponding stored at ground station, or any combination thereof. However, in other implementations, other manners of determining confidence values 352-355 are contemplated. For example, confidence values 352 and 354 can be adjusted based on availability of a respective augmentation source, a relative position between vehicle 308, stored at ground station as part of vehicle data (e.g., vehicle data 356), a regional focus of an associated GNSS network (e.g., increasing a confidence value of an augmentation source associated with Galileo when vehicle 308 is in France), or any combination thereof. Further, in cases where ground station 306 detects a discrepancy between augmentation data 324 and 326, ground station 306 adjusts one or more of confidence values 352 and 354 based on a determined source of the discrepancy. In other words, in response to determining that augmentation data 324 likely includes erroneous data, confidence value 352 is adjusted. In some cases, augmentation data 324 is determined to likely include erroneous data based on comparisons with augmentation data 326, other augmentation data, or corresponding vehicle data (e.g., vehicle data 356). In some implementations, confidence values are elevated based on augmentation data being received with additional security. For example, due to augmentation data 326 being encrypted and ground station 306 successfully decrypting augmentation data 326, augmentation data 326 is less likely to be spoofed data, and thus confidence value 354 is higher than it would be if augmentation data 326 were not encrypted. In some implementations, confidence values 352 and 354 are periodically updated (e.g., once an hour, once a day, or once a week).

As discussed above, in some implementations, augmentation data (e.g., augmentation data 326) is received encrypted, digitally signed, or both. Further, in some implementations, aggregated data 332 is expected to be encrypted, digitally signed, or both, when received at vehicle 308. Ground station 306 decrypts augmentation data, verifies a corresponding digital signature, or both. Further, in some implementations, ground station 306 encrypts, adds a digital signature, or both to aggregated data 332, even if corresponding augmentation data is received without encryption, a digital signature, or both.

In the illustrated implementation, transceiver 310 of vehicle 308 receives navigation data 322 from one or more GNSS constellations and aggregated data 332 from ground station 306. Transceiver 310 forwards navigation data 322 and aggregated data 332 to processor(s) 312. Processor(s) 312 verify navigation data from aggregated data 332 and then perform a verification of navigation data 322 based on a comparison with the navigation data of aggregated data 332. Processor(s) 312 control operation of vehicle 308 based on the verification of navigation data 322. More specifically, in response to navigation data 322 matching the navigation data from aggregated data 332, processor(s) 312 use navigation data 322 (or navigation data from aggregated data 332) to identify a position of vehicle 308. Further, processor(s) 312 generate vehicle report 334, indicating normal operation. In response to a discrepancy between navigation data 322 and the navigation data from aggregated data 332, processor(s) 312 indicate the discrepancy in vehicle report 334. Vehicle report 334 is sent to ground station 306 via transceiver 310. In some implementations, vehicle 308 identifies a source of the discrepancy (e.g., navigation data from a particular GNSS satellite) and indicates the source in vehicle report 334.

As discussed above, in some implementations, aggregated data 332 is encrypted, digitally signed, or both. In such implementations, verification of navigation data from aggregated data 332 includes decrypting aggregated data 332, confirming authenticity of aggregated data by verifying a digital signature associated with aggregated data 332, or both.

In some implementations, vehicle 308 selects GNSS satellites from which to process navigation data based on aggregated data 332. For example, vehicle 308 decides to no longer process navigation data from a GNSS satellite providing navigation data identified as being erroneous. As a result, navigation signals from a spoofed GNSS satellite are ignored by vehicle 308. As another example, some navigation data transmissions received at vehicle 308 from some GNSS satellites have a carrier-to-noise ratio that fail to meet a standard minimum signal fidelity threshold of vehicle 308. However, vehicle 308 can use the navigation data from aggregated data 332 to allow transceiver 310 to correlate navigation data from those GNSS satellites for longer periods of time. As a result, due to aggregated data 332, vehicle 308 can decide to use navigation data from GNSS satellites that fail to meet the standard minimum signal fidelity threshold but meet an alternative minimum signal fidelity threshold instead. In some cases, using navigation data from GNSS satellites that fail to meet the standard minimum signal fidelity threshold mitigates effects of jamming by allowing satellites that would be jammed or otherwise unusable to be used for navigation.

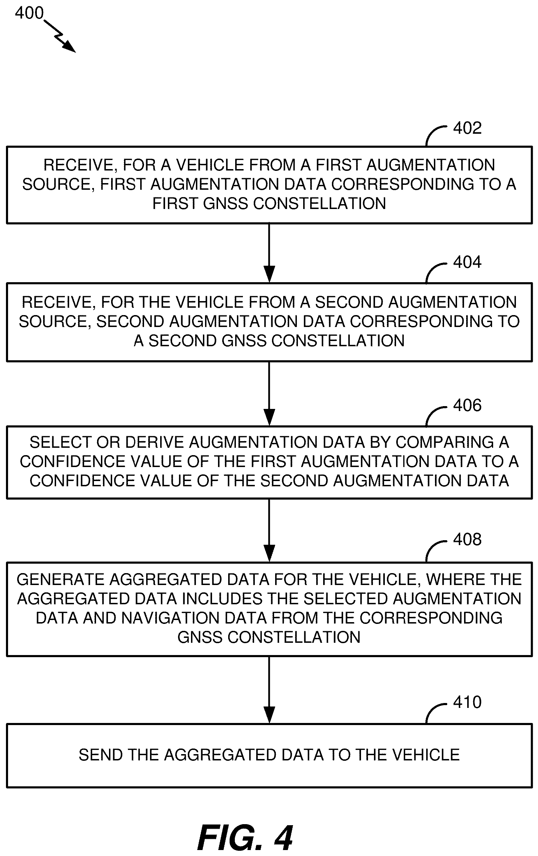

FIG. 4 is a flow chart of a method 400 of a method of sending navigation data associated with a GNSS network to a vehicle in accordance with some implementations. In some implementations, method 400 is initiated by one or more processors in response to one or more instructions stored by a computer-readable storage medium. In some implementations, some portions of method 400 are performed simultaneously, such as blocks 402 and 404 or blocks 406 and 408.

Method 400 includes, at block 402, receiving, for a vehicle from a first augmentation source, first augmentation data corresponding to a first GNSS constellation. For example, ground station 106 of FIG. 1 receives augmentation data 132 corresponding to GNSS constellation 110 for vehicle 108. As another example, ground station 206 of FIG. 2 receives augmentation data 232 corresponding to GNSS constellation 210 for vehicle 208.

Method 400 includes, at block 404, receiving, for the vehicle from a second augmentation source, second augmentation data corresponding to a second GNSS constellation. For example, ground station 106 of FIG. 1 receives augmentation data 134 corresponding to GNSS constellation 110 for vehicle 108. As another example, ground station 206 of FIG. 2 receives augmentation data 234 corresponding to GNSS constellation 250 for vehicle 208.

Method 400 includes, at block 406, selecting or deriving augmentation data by comparing a confidence value of the first augmentation data to a confidence value of the second augmentation data. For example, ground station 106 compares a confidence value associated with augmentation data 132 to a confidence value associated with augmentation data 134. In response to detecting that augmentation data 132 is associated with a higher confidence value, augmentation data 132 is selected.

Method 400 includes, at block 408, generating aggregated data for the vehicle, wherein the aggregated data includes the selected augmentation data and navigation data from the corresponding GNSS constellation. For example, ground station 106 generates aggregated data using augmentation data 132 and navigation data associated with augmentation data 132. In various implementations, the navigation data is sent as part of augmentation data 132, is stored at ground station 106, or both.

Method 400 includes, at block 410, sending the aggregated data to the vehicle. For example, ground station 106 sends aggregated data 142 to vehicle 108. In some implementations, aggregated data 142 is sent using a secured link between ground station 106 and vehicle 108.

The methods described above with reference to FIG. 4 can be implemented to realize one or more of the technical advantages described in more detail above. For example, method 400 provides aggregated data to a vehicle that can enable the vehicle to detect and ignore erroneous or spoofed navigation data received from a device pretending to be a GNSS satellite.

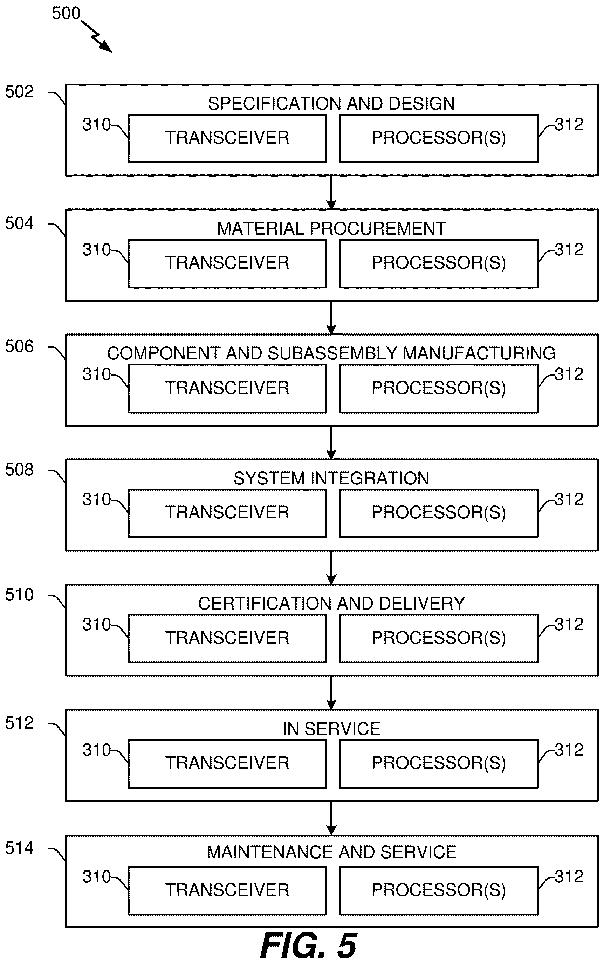

Referring to FIG. 5, a flowchart illustrative of an example method 500 of a life cycle of an aircraft that receives navigation data associated with a GNSS network in accordance with some examples of the subject disclosure is shown. As described above with reference to FIG. 3, the navigation data is received using transceiver 310 and is processed using processor(s) 312, enabling verification of navigation data received from GNSS satellites. During pre-production, the exemplary method 500 includes, at block 502, specification and design of an aircraft, such as vehicle 108 of FIG. 1, vehicle 208 of FIG. 2, or vehicle 308 of FIG. 3. During specification and design of the aircraft, the method 500 can include specification and design of transceiver 310 and processor(s) 312. At block 504, the method 500 includes material procurement, which can include procuring materials for transceiver 310 and processor(s) 312. In some implementations, transceiver 310 is replaced by a receiver and a transmitter.

During production, the method 500 includes, at block 506, component and subassembly manufacturing and, at block 508, system integration of the aircraft. For example, the method 500 can include component and subassembly manufacturing of transceiver 310 and processor(s) 312 and system integration of transceiver 310 and processor(s) 312. At block 510, the method 500 includes certification and delivery of the aircraft and, at block 512, placing the aircraft in service. Certification and delivery can include certification of transceiver 310 and processor(s) 312 to place transceiver 310 and processor(s) 312 in service. While in service by a customer, the aircraft can be scheduled for routine maintenance and service (which can also include the resource-efficient retrofit, modification, reconfiguration, refurbishment, and so on). At block 514, the method 500 includes performing maintenance and service on the aircraft, which can include performing maintenance and service on transceiver 310 and processor(s) 312. Alternatively, performing maintenance and service on the aircraft can include replacing transceiver 310 and processor(s) 312 during a retrofit operation.

Each of the processes of the method 500 can be performed or carried out by a system integrator, a third party, and/or an operator (e.g., a customer). For the purposes of this description, a system integrator can include without limitation any number of aircraft manufacturers and major-system subcontractors; a third party can include without limitation any number of venders, subcontractors, and suppliers; and an operator can be an airline, leasing company, military entity, service organization, and so on.

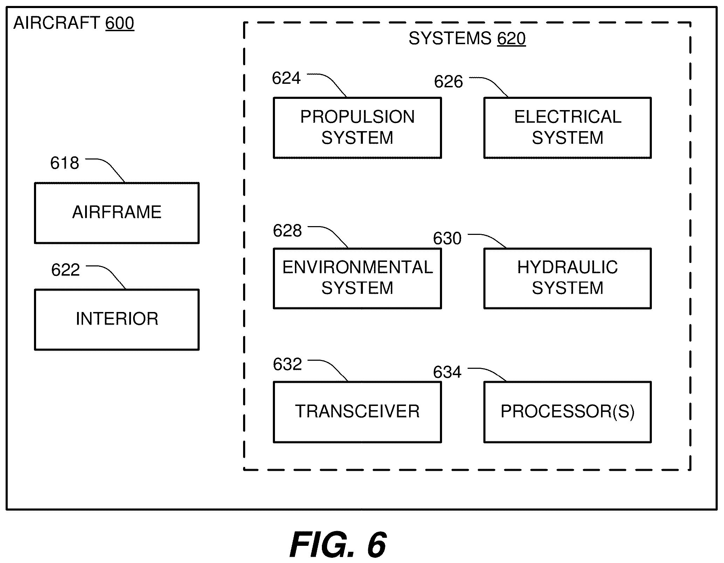

Aspects of the disclosure can be described in the context of an example of a vehicle. A particular example of a vehicle is an aircraft 600 as shown in FIG. 6. In the example of FIG. 6, the aircraft 600 includes an airframe 618 with a plurality of systems 620 and an interior 622. Examples of the plurality of systems 620 include one or more of a propulsion system 624, an electrical system 626, an environmental system 628, a hydraulic system 630, a transceiver 632, and processor(s) 634. Any number of other systems can be included. In the example of FIG. 6, transceiver 632 and processor(s) 634 receive and verify navigation data from GNSS satellites, a ground station, or both, and correspond to the transceiver and processor(s) described above with reference to FIGs. 1-3, the transceiver 310 and processor(s) 312 included in the aircraft associated with the method 500 of FIG. 5, or any combination thereof. In some implementations, transceiver 632 is replaced by a receiver and a transmitter.

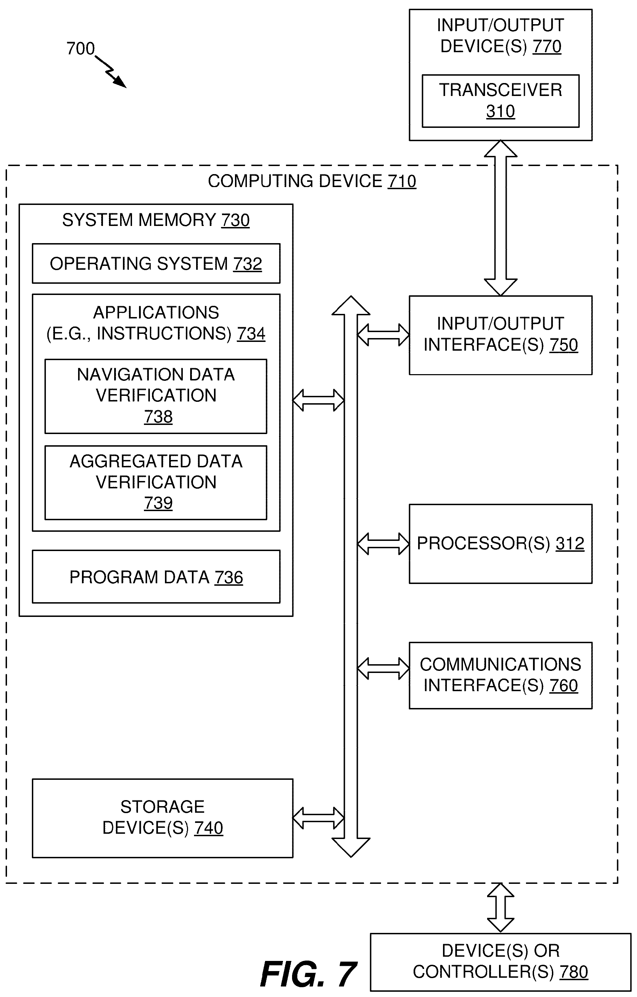

FIG. 7 is a block diagram of a computing environment 700 including a computing device 710 configured to support aspects of computer-implemented methods and computer-executable program instructions (or code) according to the present disclosure. For example, the computing device 710, or portions thereof, is configured to execute instructions to initiate, perform, or control one or more operations described with reference to FIGS. 1-6. In some implementations, transceiver 310 is replaced by a receiver and a transmitter.

The computing device 710 includes one or more processors 312. The processor(s) 312 are configured to communicate with system memory 730, one or more storage devices 740, one or more input/output interfaces 750, one or more communications interfaces 760, or any combination thereof. The system memory 730 includes volatile memory devices (e.g., random access memory (RAM) devices), nonvolatile memory devices (e.g., read-only memory (ROM) devices, programmable read-only memory, and flash memory), or both. The system memory 730 stores an operating system 732, which can include a basic input/output system for booting the computing device 710 as well as a full operating system to enable the computing device 710 to interact with users, other programs, and other devices. The system memory 730 stores system (program) data 736, such as navigation data.

The system memory 730 includes one or more applications 734 (e.g., sets of instructions) executable by the processor(s) 312. As an example, the one or more applications 734 include instructions executable by the processor(s) 312 to initiate, control, or perform one or more operations described with reference to FIGS. 1-6. To illustrate, the one or more applications 734 include instructions executable by the processor(s) 312 to initiate, control, or perform one or more operations described with reference to operations performed by, transceiver 310, processor(s) 312, or a combination thereof. Additionally, the one or more applications 734 include applications that, when executed, verify navigation data 738 (e.g., by comparing the navigation data to navigation data received as part of aggregated data). Further, the one or more applications 734 include applications that, when executed, verify aggregated data 739 (e.g., by verifying a digital signature associated with the aggregated data).

In a particular implementation, the system memory 730 includes a non-transitory, computer-readable medium storing the instructions that, when executed by the processor(s) 312, cause the processor(s) 312 to initiate, perform, or control operations to enable verification of navigation data.

The one or more storage devices 740 include nonvolatile storage devices, such as magnetic disks, optical disks, or flash memory devices. In a particular example, the storage devices 740 include both removable and non-removable memory devices. The storage devices 740 are configured to store an operating system, images of operating systems, applications (e.g., one or more of the applications 734), and program data (e.g., the system program data 736). In a particular aspect, the system memory 730, the storage devices 740, or both, include tangible computer-readable media. In a particular aspect, one or more of the storage devices 740 are external to the computing device 710.

The one or more input/output interfaces 750 enable the computing device 710 to communicate with one or more input/output devices 770 to facilitate user interaction. For example, the one or more input/output interfaces 750 can include a display interface, an input interface, or both. For example, the input/output interface 750 is adapted to receive input from a user, to receive input from another computing device, or a combination thereof. In some implementations, the input/output interface 750 conforms to one or more standard interface protocols, including serial interfaces (e.g., universal serial bus (USB) interfaces or Institute of Electrical and Electronics Engineers (IEEE) interface standards), parallel interfaces, display adapters, audio adapters, or custom interfaces ("IEEE" is a registered trademark of The Institute of Electrical and Electronics Engineers, Inc. of Piscataway, New Jersey). In some implementations, the input/output device 770 includes one or more user interface devices and displays, including some combination of buttons, keyboards, pointing devices, displays, speakers, microphones, touch screens, and other devices. In the illustrated implementation, input/output devices 770 include transceiver 310, which is used to receive navigation data from one or more GNSS satellites, aggregated data from a ground station, or both, and communicate received data to computing device 710.

The processor(s) 312 are configured to communicate with devices or controllers 780 via the one or more communications interfaces 760. For example, the one or more communications interfaces 760 can include a network interface.

In conjunction with the described systems and methods, an apparatus is disclosed that includes means for storing data for a vehicle. The apparatus also includes means for processing, configured to receive, from a first augmentation source, first augmentation data of a first Global Navigation Satellite System (GNSS) constellation; receive, from a second augmentation source that is different from the first augmentation source, second augmentation data of a second GNSS constellation; select or derive augmentation data by comparing a confidence value of the first augmentation data to a confidence value of the second augmentation data; generate aggregated data for the vehicle, the aggregated data including the selected augmentation data and navigation data from the corresponding GNSS constellation; and send the aggregated data to the vehicle.

In some implementations, the apparatus corresponds to the ground station 106, the ground station 206, the ground station 306, one or more other circuits or devices configured to receive digital data, or a combination thereof.

In some implementations, a non-transitory, computer-readable medium stores instructions that, when executed by one or more processors, cause the one or more processors to initiate, perform, or control operations to perform part or all of the functionality described above. For example, the instructions can be executable to implement one or more of the operations or methods of FIGS. 1-7. In some implementations, part or all of one or more of the operations or methods of FIGS. 1-7 can be implemented by one or more processors (e.g., one or more central processing units (CPUs), one or more graphics processing units (GPUs), one or more digital signal processors (DSPs)) executing instructions, by dedicated hardware circuitry, or any combination thereof.

Further, the disclosure includes embodiments according to the following examples:
According to Example 1, a device includes memory configured to store vehicle data for a vehicle; and one or more processors coupled to the memory and configured to: receive, from a first augmentation source, first augmentation data corresponding to a first Global Navigation Satellite System (GNSS) constellation; receive, from a second augmentation source that is different from the first augmentation source, second augmentation data corresponding to a second GNSS constellation; select or derive augmentation data by comparing a confidence value of the first augmentation data to a confidence value of the second augmentation data; generate aggregated data for the vehicle, the aggregated data including the selected augmentation data and navigation data from the corresponding GNSS constellation; and send the aggregated data to the vehicle.
Example 2 includes the device of Example 1, wherein the confidence value of the first augmentation data is based on availability of the first augmentation source.
Example 3 includes the device of Example 1 or Example 2, wherein the one or more processors are further configured to: verify a digital signature associated with the first augmentation data.
Example 4 includes the device of Example 3, wherein the one or more processors are further configured to: digitally sign the augmentation data for the vehicle with a second digital signature to facilitate authenticity confirmation at the vehicle.
Example 5 includes the device of any of Example 1 to Example 4, wherein the one or more processors are configured to send the aggregated data to the vehicle via a secured link between the one or more processors and the vehicle.
Example 6 includes the device of Example 5, wherein the first augmentation source has a protocol that requires a constant network connection between the first augmentation source and a recipient vehicle, and wherein the first augmentation source does not have a constant network connection to the vehicle.
Example 7 includes the device of any of Example 1 to Example 6, wherein the one or more processors are further configured to: receive, from the vehicle, a report of a detected discrepancy between navigation data of the aggregated data and navigation data received at the vehicle from the corresponding GNSS constellation.
Example 8 includes the device of any of Example 1 to Example 7, wherein the generation of the aggregated data includes combining multiple transmissions of augmentation data corresponding to multiple respective periods of time.
Example 9 includes the device of any of Example 1 to Example 8, wherein the second GNSS constellation is the first GNSS constellation.
Example 10 includes the device of any of Example 1 to Example 9, wherein the first augmentation source is one of High Accuracy and Robustness Service (HARS), High Accuracy Service (HAS), Southern Positioning Augmentation Network (SouthPAN), or one or more local reference stations, and wherein the second augmentation source is a different one of HARS, HAS, SouthPAN, or one or more local reference stations.
Example 11 includes the device of any of Example 1 to Example 10, wherein the first GNSS constellation includes satellites from a Global Positioning System (GPS), a BeiDou Navigation Satellite System (BDS), a Galileo system, a Global'naya Navigatsionnaya Sputnikovaya Sistema (GLONASS) system, an India Regional Navigation Satellite System (IRNSS), or a Quasi-Zenith Satellite System (QZSS).
According to Example 12, a method includes receiving, for a vehicle from a first augmentation source, first augmentation data corresponding to a first Global Navigation Satellite System (GNSS) constellation; receiving, for the vehicle from a second augmentation source that is different from the first augmentation source, second augmentation data corresponding to a second GNSS constellation; selecting or deriving augmentation data by comparing a confidence value of the first augmentation data to a confidence value of the second augmentation data; generating aggregated data for the vehicle, wherein the aggregated data includes the selected augmentation data and navigation data from the corresponding GNSS constellation; and sending the aggregated data to the vehicle.
Example 13 includes the method of Example 12, and further includes receiving, from the vehicle, a report of a detected discrepancy between the aggregated data and navigation data received by the vehicle.
Example 14 includes the method of Example 13, and further includes publishing an indication of the report to a second vehicle.
Example 15 includes the method of Example 13 or Example 14, and further includes, in response to receiving a plurality of reports including the report, identifying a region where repeated discrepancies occur.
Example 16 includes the method of any of Example 12 to Example 15, wherein the augmentation data includes one or more of orbit data of one or more satellites of the corresponding GNSS constellation, clock data of one or more satellites of the corresponding GNSS constellation, tropospheric model data, or ionospheric model data.
According to Example 17, an aircraft includes a transceiver configured to receive unsigned navigation data associated with satellites of a Global Navigation Satellite System (GNSS) constellation; and one or more processors coupled to the transceiver and configured to: verify authenticity of signed navigation data from a ground station, wherein the signed navigation data is received as part of a transmission of aggregated data; after verification of the signed navigation data, perform a verification of the unsigned navigation data based on a comparison with the signed navigation data; and control operation of the aircraft based on the verification of the unsigned navigation data.
Example 18 includes the aircraft of Example 17, wherein the one or more processors are further configured to: in response to detecting a discrepancy between the signed navigation data and the unsigned navigation data, exclude at least a portion of the unsigned navigation data corresponding to the discrepancy from being used to control the operation of the aircraft.
Example 19 includes the aircraft of Example 17 or Example 18, wherein the one or more processors are further configured to: in response to detecting a discrepancy between the signed navigation data and the unsigned navigation data, report the discrepancy to the ground station.
Example 20 includes the aircraft of any of Example 17 to Example 19, wherein the one or more processors are further configured to: process received unsigned navigation data from the GNSS constellation based on the aggregated data to enable selection of GNSS constellation satellites that have a carrier-to-noise ratio that meet an alternate minimum signal fidelity threshold but fail to meet a standard minimum signal fidelity threshold.

The illustrations of the examples described herein are intended to provide a general understanding of the structure of the various implementations. The illustrations are not intended to serve as a complete description of all of the elements and features of apparatus and systems that utilize the structures or methods described herein. Many other implementations may be apparent to those of skill in the art upon reviewing the disclosure. Other implementations may be utilized and derived from the disclosure, such that structural and logical substitutions and changes may be made without departing from the scope of the disclosure. For example, method operations may be performed in a different order than shown in the figures or one or more method operations may be omitted. Accordingly, the disclosure and the figures are to be regarded as illustrative rather than restrictive.

Moreover, although specific examples have been illustrated and described herein, it should be appreciated that any subsequent arrangement designed to achieve the same or similar results may be substituted for the specific implementations shown. This disclosure is intended to cover any and all subsequent adaptations or variations of various implementations. Combinations of the above implementations, and other implementations not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features may be grouped together or described in a single implementation for the purpose of streamlining the disclosure. Examples described above illustrate but do not limit the disclosure. It should also be understood that numerous modifications and variations are possible in accordance with the principles of the present disclosure. As the following claims reflect, the claimed subject matter may be directed to less than all of the features of any of the disclosed examples. Accordingly, the scope of the disclosure is defined by the following claims and their equivalents.

## Claims

1. A device comprising:
memory (342) configured to store vehicle data (356, 358) for a vehicle (308); and
one or more processors (344) coupled to the memory and configured to:
receive, from a first augmentation source (102, 202), first augmentation data (132, 232) corresponding to a first Global Navigation Satellite System (GNSS) constellation (110, 210);
receive, from a second augmentation source (104, 204) that is different from the first augmentation source, second augmentation data (134, 234) corresponding to a second GNSS constellation (110, 250);
select or derive augmentation data by comparing a confidence value of the first augmentation data (352) to a confidence value of the second augmentation data (354);
generate aggregated data (332) for the vehicle, wherein the aggregated data includes the selected augmentation data and navigation data from the corresponding GNSS constellation; and
send the aggregated data to the vehicle.

2. The device of claim 1, wherein the confidence value of the first augmentation data is based on availability of the first augmentation source.

3. The device of claim 1 or claim 2, wherein the one or more processors are further configured to:
verify a first digital signature associated with the first augmentation data.

4. The device of any one of claims 1 to 3, wherein the one or more processors are further configured to:
receive, from the vehicle, a report (334) of a detected discrepancy between navigation data of the aggregated data and navigation data received at the vehicle from the corresponding GNSS constellation.

5. The device of any one of claims 1 to 4, wherein the generation of the aggregated data comprises combining multiple transmissions of augmentation data corresponding to multiple respective periods of time.

6. The device of any one of claims 1 to 5, wherein the second GNSS constellation is the first GNSS constellation.

7. The device of any one of claims 1 to 6, wherein the first augmentation source is one of High Accuracy and Robustness Service (HARS), Galileo High Accuracy Service (HAS), Southern Positioning Augmentation Network (SouthPAN), or one or more local reference stations, and wherein the second augmentation source is a different one of HARS, Galileo HAS, SouthPAN, or one or more local reference stations.

8. The device of any one of claims 1 to 7, wherein the first GNSS constellation includes satellites from a Global Positioning System (GPS), a BeiDou Navigation Satellite System (BDS), a Galileo system, a Global'naya Navigatsionnaya Sputnikovaya Sistema (GLONASS) system, an India Regional Navigation Satellite System (IRNSS), or a Quasi-Zenith Satellite System (QZSS).

9. A method (400) comprising:
receiving (402), for a vehicle (308) from a first augmentation source (102, 202), first augmentation data (132) corresponding to a first Global Navigation Satellite System (GNSS) constellation (110, 210);
receiving (404), for the vehicle from a second augmentation source (104, 204) that is different from the first augmentation source, second augmentation data (134) corresponding to a second GNSS constellation (110, 250);
selecting or deriving (406) augmentation data by comparing a confidence value of the first augmentation data (352) to a confidence value of the second augmentation data (354);
generating (408) aggregated data (332) for the vehicle, wherein the aggregated data includes the selected augmentation data and navigation data from the corresponding GNSS constellation; and
sending (410) the aggregated data to the vehicle.

10. The method of claim 9, further comprising receiving, from the vehicle, a report (334) of a detected discrepancy between the aggregated data and navigation data received by the vehicle.

11. The method of claim 9 or claim 10, wherein the augmentation data includes one or more of orbit data of one or more satellites (112, 114, 116) of the corresponding GNSS constellation, clock data of one or more satellites of the corresponding GNSS constellation, tropospheric model data, or ionospheric model data.

12. An aircraft comprising:
a transceiver (310) configured to receive unsigned navigation data (322) associated with satellites (112, 114, 116) of a Global Navigation Satellite System (GNSS) constellation (110); and
one or more processors (312) coupled to the transceiver and configured to:
verify authenticity of signed navigation data from a ground station (306), wherein the signed navigation data is received as part of a transmission of aggregated data (332);
after verification of the signed navigation data, perform a verification of the unsigned navigation data based on a comparison with the signed navigation data; and
control operation of the aircraft (308) based on the verification of the unsigned navigation data.

13. The aircraft of claim 12, wherein the one or more processors (312) are further configured to:
in response to detecting a discrepancy between the signed navigation data and the unsigned navigation data, exclude at least a portion of the unsigned navigation data corresponding to the discrepancy from being used to control the operation of the aircraft.

14. The aircraft of claim 12 or claim 13, wherein the one or more processors are further configured to:
in response to detecting a discrepancy between the signed navigation data and the unsigned navigation data, report (334) the discrepancy to the ground station.

15. The aircraft of any one of claims 12 to 14, wherein the one or more processors are further configured to:
process received unsigned navigation data (122) from the GNSS constellation based on the aggregated data to enable selection of GNSS constellation satellites that have a carrier-to-noise ratio that meet an alternate minimum signal fidelity threshold but fail to meet a standard minimum signal fidelity threshold.
